# EUROPÄISCHE PATENTSCHRIFT

(11) **EP 2 678 254 B1**
(45) Veröffentlichungstag und Bekanntmachung des Hinweises auf die Patenterteilung: **19.04.2017**
(21) Anmeldenummer: 12703822.2
(22) Anmeldetag: 15.02.2012
(51) Int. Cl.: B65G 23/22, H02K 7/08, H02K 7/14

(54) **VORRICHTUNG FÜR EINE GURTFÖRDERANLAGE MIT EINEM GETRIEBELOSEN ANTRIEB FÜR EINE ANTRIEBSTROMMEL DER GURTFÖRDERANLAGE**
APPARATUS FOR A BELT CONVEYOR WITH A GEARLESS DRIVE FOR A DRIVE DRUM OF THE BELT CONVEYOR
DISPOSITIF POUR UNE COURROIE TRANSPORTEUSE AVEC UN ENTRAÎNEMENT SANS ENGRENAGE POUR UN TAMBOUR D' ENTRAÎNEMENT DE LA COURROIE TRANSPORTEUSE

(30) Priorität: 23.02.2011 EP 11155619
(43) Veröffentlichungstag der Anmeldung: 01.01.2014
(73) Patentinhaber: ABB Schweiz AG, 5400 Baden (CH)
(72) Erfinder: ERB, Hanspeter, CH-3700 Spiez (CH); MAIER, Urs, CH-5628 Aristau (CH)
(74) Vertreter: ABB Patent Attorneys
(86) Internationale Anmeldenummer: PCT/EP2012/052595
(87) Internationale Veröffentlichungsnummer: WO 2012/113688

(56) Entgegenhaltungen:
- DE-A1-102008 054 475
- US-A- 5 729 066
- US-A- 6 166 469
- US-A1- 2003 030 339
- Schwulera, R: "Advanced Drive System Saves up to 20% Energy", , vol. 13 1 January 1987 (1987-01-01), pages 1-12, XP055076615, Adelaide, Australia DOI: A19199-E273-B198-X-7600 ISBN: 0858253542 Retrieved from the Internet: URL:http://search.informit.com.au/document Summary;dn=662494700298466;res=IELENG [retrieved on 2013-08-27]

## Beschreibung

### TECHNISCHES GEBIET

Die vorliegende Erfindung bezieht sich auf das Gebiet der Gurtförderanlagen. Sie betrifft eine Vorrichtung für eine Gurtförderanlage umfassend eine Antriebstrommeleinheit, welche Antriebstrommeleinheit eine Antriebstrommel und eine mit der Antriebstrommel verbundene Trommelwelle aufweist, und einen getriebelosen Antrieb, welcher Antrieb einen Rotor, eine mit dem Rotor verbundene, lagerlose Rotorwelle und einen aussen um den Rotor herum angeordneten Stator, wobei die Rotorwelle mit der Trommelwelle verbindbar ist.

### STAND DER TECHNIK

Gurtförderanlagen, welche auch als Förderbandanlagen oder Bandförderer bezeichnet werden können, werden zum Transport von Stück- oder Schüttgut im Bergbau und in der Industrie verwendet. Wie aus DE 847,427 bekannt, ist ein endloser Gurt horizontal rollend gelagert und wird von einer Antriebstrommel, die durch einen Antrieb in eine Drehbewegung versetzt wird, angetrieben.

Gurtförderanlagen werden oft in kontinuierlich laufenden Prozessen eingesetzt, wie etwa einem Übertageabbau von erzhaltigem Gestein mittels eines Schaufelradbaggers. Standzeiten aufgrund von Fehlfunktionen einer Gurtförderanlage sind daher zu minimieren, weil in einem solchen Falle der Gesamtprozess nicht weitergeführt werden kann und es zu teuren Ausfallzeiten der Produktion kommt. Eine der Hauptursachen für Fehlfunktionen einer Gurtförderanlage ist ein Ausfall von Verschleissteilen. Viele dieser Verschleissteile befinden sich in dem Antrieb der Gurtförderanlage, wo aufgrund der Verwendung von Kupplungen und Getrieben viele bewegte Teile vorhanden sind. Daher muss die Anzahl der Verschleissteile auf ein Minimum reduziert werden, um die mittlere Betriebszeit zwischen Ausfällen zu maximieren.

Bekannt sind getriebelose Antriebe vor allem für grössere Gurtförderanlagen, welche typischerweise eine Antriebsleistung von mehr als 2 MW aufweisen. Hierbei ist ein Rotor eines getriebelosen Antriebes direkt auf einer Rotorwelle, welche an beiden Enden Rotorwellenlager aufweist und flexible mit der Antriebstrommel verbunden ist, angebracht. Als Gegenstück ist ein Stator, der mit einem Fundament verbunden ist, aussen um den Rotor herum angeordnet. Diese Lösung verwendet keine Kupplung und kein Getriebe, weist aber zwei zusätzliche Rotorwellenlager als weitere Verschleissteile auf.

"Advanced Drive System Saves up to 20% Energy", Siemens Broschüre, beschreibt eine Gurtförderanlage mit einem getriebelosen Antrieb für eine Antriebstrommel ohne zusätzliches Rotorlager gemäß dem Oberbegriff des Anspruchs 1. Dadurch ist eine Montage oder eine Wartung der Antriebstrommel und des Antriebes sehr aufwendig, weil der Antrieb nicht einfach von der Antriebstrommel getrennt werden kann. Im Falle einer Demontage der Antriebstrommel muss der gesamte getriebelose Antrieb ebenfalls demontiert werden.

### DARSTELLUNG DER ERFINDUNG

Aufgabe der vorliegenden Erfindung ist es, eine einfache Trennung zwischen einem getriebelosen Antrieb mit einer lagerlosen Rotorwelle und einer Antriebstrommel einer Gurtförderanlage zu ermöglichen.

Diese Aufgabe wird durch eine Vorrichtung für eine Gurtförderanlage mit den Merkmalen des Patentanspruches 1 gelöst. Bevorzugte Ausführungsformen sind Gegenstand der abhängigen Patentansprüche.

Gegenstand der Erfindung ist es, dass eine Stütze, welche auch als Halterung bezeichnet werden kann, im Sinne eines mechanischen Auflagers oder Loslagers vorhanden ist. Die Stütze ist so positioniert, dass sie eine horizontale Ablage für die Rotorwelle im Falle einer Trennung zwischen der Rotorwelle und der Trommelwelle bildet, ohne dass der Rotor den Stator berührt und dass sie die Rotorwelle im Falle einer Verbindung zwischen der Rotorwelle und der Trommelwelle nicht berührt.

Eine erste bevorzugte Ausführungsform betrifft eine Radialstütze im Sinne eines kurzen mechanischen Querlagers, welche die Rotorwelle im Falle einer Trennung zwischen der Rotorwelle und der Trommelwelle in einer Drehbewegung um eine Achse der Rotorwelle stützt, ohne dass der Rotor den Stator berührt und die Rotorwelle im Falle einer Verbindung zwischen der Rotorwelle und der Trommelwelle nicht berührt. Dadurch wird auch eine Kontrolle der Rotorwelle nach einer Trennung zwischen der Rotorwelle und der Trommelwelle im Betrieb, das heisst während einer Drehbewegung um eine Achse der Rotorwelle, ermöglicht.

Eine weitere vorteilhafte Ausführungsform betrifft eine Radialstütze mit einer radial innen liegenden Lauffläche aus Bronze. Dadurch wird eine einfache Herstellung einer wartungsfreien selbstschmierenden Radialstützung ermöglicht.

Eine weitere vorteilhafte Ausführungsform betrifft eine höhenverstellbare Stütze, bei der eine Stützfläche vertikal um eine dem Abstand zwischen der Stütze und der Rotorwelle entsprechende Strecke anhebbar ist. Dadurch wird eine Montage und Demontage der Rotorwelle ohne Verwendung eines Kranes ermöglicht.

### KURZE BESCHREIBUNG DER FIGUREN

Nachfolgend wird die Erfindung anhand von einem Ausführungsbeispiel im Zusammenhang mit den Figuren näher erläutert. Die Figuren zeigen:
- Figur 1: eine Antriebstrommel mit einem getriebelosen Antrieb in einem Schnitt in axialer Richtung;
- Figur 2: eine Stütze in einem Schnitt in radialer Richtung;
- Figur 3: eine Radialstütze in einem Schnitt in radialer Richtung.

Die in den Zeichnungen verwendeten Bezugszeichen sind in der Bezugszeichenliste zusammengefasst. Grundsätzlich sind gleiche Teile mit denselben Bezugszeichen versehen.

### WEGE ZUR AUSFÜHRUNG DER ERFINDUNG

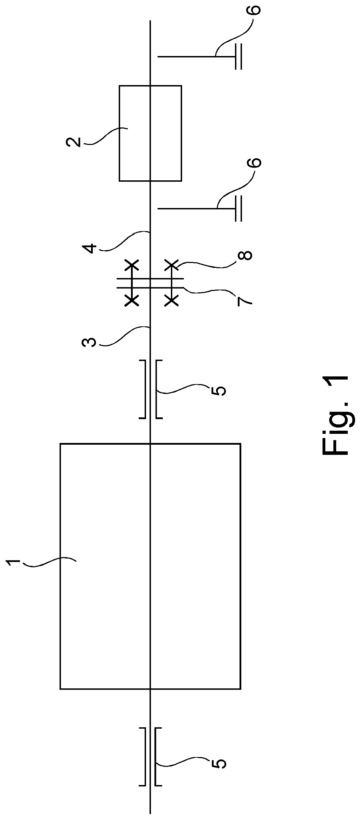

Fig. 1 zeigt eine Antriebstrommel 1 einer Gurtförderanlage und einen getriebelosen Antrieb in einem Schnitt in axialer Richtung quer zur Gurtlaufrichtung. Die Antriebstrommel 1 rotiert um ihre Drehachse auf einer Trommelwelle 3, welche beidseitig durch Trommelwellenlager 5 geführt ist. Über einen Flansch 7 ist die Trommelwelle 3 mit einer lagerlosen Rotorwelle 4 verbindbar. Auf der Rotorwelle 4 befindet sich der Rotor 2. Als Gegenstück ist ein Stator aussen um den Rotor 2 herum angeordnet, welcher in der Fig. 1 nicht dargestellt ist. Der Stator und der Rotor 2 weisen einen radialen Abstand auf, welcher typischerweise zwischen 10-18 mm beträgt. Im Falle einer Verbindung zwischen der Rotorwelle 4 und der Trommelwelle 3 bilden diese beiden Wellen eine Einheit und sind ausschliesslich durch die Trommelwellenlager 5 in ihrer Drehbewegung radial geführt. Der Antrieb umfasst auf beiden Seiten des Rotors 2 jeweils eine Stütze 6.

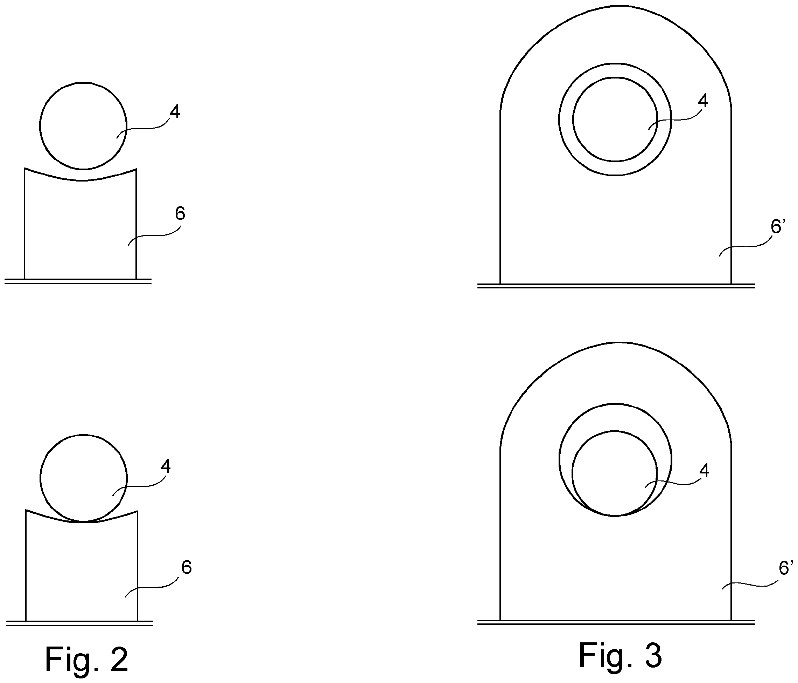

Fig. 2 zeigt einen Schnitt in radialer Richtung quer zu der Rotorwelle 4 durch eine der Stützen 6 in Fig. 1. Im oberen Teil der Fig. 2 ist die gegenseitige Lage der Stütze 6 und der Rotorwelle 4 im Falle einer Verbindung zwischen der Rotorwelle 4 und der Trommelwelle 3 dargestellt. Die Stütze 6 und die Rotorwelle 4 weisen einen vertikalen Abstand auf, welcher kleiner ist als der Abstand zwischen dem Stator und dem Rotor 2. Bei einer Trennung zwischen der Rotorwelle 4 und der Trommelwelle 3 ist die Rotorwelle 4 nicht mehr durch die Trommelwellenlager 5 geführt. In diesem Fall, welcher im unteren Teil der Fig. 2 dargestellt ist, stützen die beiden Stützen 6 die Rotorwelle 4 ohne eine Berührung zwischen dem Rotor 2 und dem Stator zuzulassen.

Die Verbindung zwischen der Rotorwelle 4 und der Trommelwelle 3 muss nicht über einen Flansch erfolgen. Es können auch andere Bauteilverbindungen, wie etwa eine Stiftverbindung, verwendet werden. Die Anzahl Stützen 6 kann variiert werden. Auch eine Stütze kann die Rotorwelle 4 führen, wenn diese geeignet ist ein resultierendes Kippmoment quer zur axialen Richtung der Rotorwelle 4 aufzunehmen. Anordnungen mehrerer Stützen 6 sind aber besonders vorteilhaft, falls sich ein Schwerpunkt der Rotorwelle 4 innerhalb der beiden in axialer Richtung äussersten Stützen 6 befindet, da in diesem Fall kein resultierendes Kippmoment auftritt. Auch die Form der Stütze kann von der Darstellung in Fig.2 abweichen. Jede Form ist geeignet, solange diese eine stabile Ablage der Rotorwelle 4 ermöglicht. Zur Stabilisierung können dabei auch zusätzliche Elemente, wie Seile, Stifte oder Schellen, verwendet werden.

Der Antrieb muss nicht ein getriebeloser Antrieb sein. Beispielsweise ist auch die nicht erfindungsgemässe Verwendung eines Antriebes mit einem Getriebe, welcher eine lagerlose Welle aufweist, möglich. Auch ist die Anwendung nicht auf Gurtförderanlage beschränkt, sondern kann bei allen getriebelosen Antriebssystemen mit einer lagerlosen Welle wie etwa bei Bergwerkförderanlagen, Gliederförderanlagen, Mühlen oder Seilbahnen, aber auch
bei Schiffsantrieben oder Windmühlen angewendet werden. Dabei kann der Antrieb auch vertikal ausgerichtet sein.

Fig. 3 zeigt eine Radialstütze 6' in einem Schnitt in radialer Richtung quer zu der Rotorwelle 4 mit einer radial innen liegenden Lauffläche aus Bronze, welche im Falle einer Verbindung zwischen der Rotorwelle 4 und der Trommelwelle 3 annähernd konzentrisch um die Rotorwelle 4 angeordnet ist. Die Radialstütze 6' und die Rotorwelle 4 weisen einen Abstand auf, welcher kleiner ist als der Abstand zwischen dem Stator und dem Rotor 2. Besonders vorteilhaft ist es, den Abstand zwischen der Radialstütze 6' und der Rotorwelle 4 möglichst klein zu gestalten, ohne dass dabei betriebliche Toleranzen zu einer Berührung zwischen der Radialstütze 6' und der Rotorwelle 4 führen. Typischerweise beträgt der Abstand zwischen 1 bis 4 mm. Im Falle einer Trennung zwischen der Rotorwelle 4 und der Trommelwelle 3, welche im Gegensatz zu einer Anordnung mit einer Stütze 6 gemäss Fig.2 nicht nur während eines Stillstandes der beiden Wellen sondern auch während einer Drehbewegung dieser erfolgen kann, wird die Rotorwelle 4 von zwei Radialstützen 6' vorübergehend radial gestützt ohne eine Berührung zwischen dem Rotor 2 und dem Stator zuzulassen. Die Lauffläche aus Bronze reduziert aufgrund der selbstschmierenden Wirkung der Bronze im Falle einer radialen Stützung während einer Drehbewegung der Rotorwelle 4 eine Reibungsbelastung zwischen der Lauffläche und der Rotorwelle 4.

Die Verbindung zwischen der Rotorwelle 4 und der Trommelwelle 3 an dem Flansch 7 erfolgt bei der Variante nach Fig. 3 bevorzugt über einen Scherbolzen 8, welcher bei einem Auftreten von einem zu hohen Torsionsmoment in der Flanschverbindung bricht und so die Verbindung zwischen der Rotorwelle 4 und der Trommelwelle 3 trennt. Beispielsweise durch einen Kurzschluss in dem Antrieb können in der Rotorwelle 4 temporär Belastungsspitzen auftreten, welche grösser sind als die Belastungen im Normalbetrieb. Diese Belastungsspitzen haben zur Folge, dass diese bei einem Ausbleiben der Trennung auf die Gurtförderanlage übertragen werden können und zu erheblichen Beschädigungen, wie etwa ein Reissen eines Gurtes, führen können. Erfolgt eine Trennung aufgrund einer solchen Belastungsspitze während die Rotorwelle 4 und Trommelwelle 3 rotieren, wird die Rotorwelle 4 nach der Trennung durch die Radialstütze 6' radial gestützt.

Anstatt des Scherbolzens 8 können auch andere Sollbruchstellen vorgesehen sein, die bei einem Überschreiten einer bestimmten Belastung versagen und damit die Verbindung zwischen der Rotorwelle 4 und der Trommelwelle 3 trennen. Auch muss die Sollbruchstelle nicht an dem Flansch 7 positioniert sein, sondern kann auch weiter in Richtung des verbindungszugewandten Trommelwellenlagers oder der verbindungszugewandten Stütze versetzt sein. Wichtig ist nur, dass der durch die Sollbruchstelle abgetrennte Teil einen Schwerpunkt aufweist, der sich innerhalb der Stützen 6 befindet. Eine Radialstütze 6' kann auch ohne eine Sollbruchstelle verwendet werden. Ein Vorhandensein der Sollbruchstelle ist aber vorteilhaft, da so ein Schutz für die Gürtförderanlage gegen Momentspitzen gewährleistet ist. Das Radiallager muss nicht konzentrisch um die Rotorwelle 4 angeordnet sein. Im Falle einer nicht konzentrischen Anordnung muss das Maximum des Abstandes zwischen der Radialstütze 6' und der Rotorwelle 4 kleiner sein als der kleinste Abstand zwischen Stator und Rotor 2. Neben der radialen Stützung kann auch eine axiale Stützung der Rotorwelle 4 vorhanden sein, welche bei ein Verwendung von Synchronmaschinen besonders vorteilhaft ist, da diese während des Betriebes keine magnetische Führung in axialer Richtung durch eine Wechselwirkung zwischen dem Rotor 2 und dem Stator aufweisen. Auch können zur Reduktion der Reibungsbelastung anstatt der Lauffläche aus Bronze andere Materialien insbesondere andere Metalle oder Kunststoffen, wie etwa Teflon, oder andere lagerähnlichen Konstruktionsprinzipien, wie etwa ein kugelgelagerter Innenring mit einem Abstand zur Rotorwelle 4, verwendet werden.

### BEZUGSZEICHENLISTE

- 1: Antriebstrommel
- 2: Rotor
- 3: Trommelwelle
- 4: Rotorwelle
- 5: Trommelwellenlager
- 6: Stütze
- 6': Radialstütze
- 7: Flansch
- 8: Scherbolzen

## Patentansprüche

1. Vorrichtung für eine Gurtförderanlage umfassend:
eine Antriebstrommeleinheit, welche Antriebstrommeleinheit eine Antriebstrommel (1) und eine mit der Antriebstrommel (1) verbundene Trommelwelle (3) aufweist, und
einen getriebelosen Antrieb, welcher Antrieb einen Rotor (2), eine mit dem Rotor (2) verbundene, lagerlose Rotorwelle (4) und einen aussen um den Rotor (2) herum angeordneten Stator aufweist, wobei
die Rotorwelle (4) mit der Trommelwelle (3) verbindbar ist, **dadurch gekennzeichnet, dass**
die Vorrichtung eine Stütze (6) aufweist, welche im Falle einer Trennung zwischen der Rotorwelle (4) und der Trommelwelle (3) die Rotorwelle (4) stützt ohne eine Berührung zwischen dem Rotor (2) und dem Stator zuzulassen und welche im Falle einer Verbindung zwischen der Rotorwelle (4) und der Trommelwelle (3) die Rotorwelle (4) nicht berührt.

2. Vorrichtung nach Anspruch 1, **dadurch gekennzeichnet, dass** die Stütze eine Radialstütze (6') ist, welche im Falle einer Trennung zwischen der Rotorwelle (4) und der Trommelwelle (3) die Rotorwelle (4) während einer Drehbewegung radial stützt.

3. Vorrichtung nach Anspruch 2, **dadurch gekennzeichnet, dass** die Radialstütze (6') eine Lauffläche aus Bronze aufweist.

4. Vorrichtung nach einem der Ansprüche 1 bis 3, **dadurch gekennzeichnet, dass** die Rotorwelle (4) unter Bildung einer Sollbruchstelle mit der Trommelwelle (3) verbindbar ist.

5. Vorrichtung nach einem der Ansprüche 1 bis 4, **dadurch gekennzeichnet, dass** die Stütze (6) höhenverstellbar ist.

6. Verfahren zum Schutz einer Gurtförderanlage, welche eine) Vorrichtung nach einem der Ansprüche 1 bis 5 aus weist, vor Momentspitzen, welches die folgenden Schritte beinhaltet:
a) Verbinden der Trommelwelle (3) und der Rotorwelle (4) über einen Scherbolzen (8);
b) Stützen der Rotorwelle (4) nachdem der Scherbolzen (8) gebrochen ist.

7. Verfahren nach Anspruch 6, welches den Schritt beinhaltet :
b') radiales Stützen der Rotorwelle (4) in einer Drehbewegung nachdem der Scherbolzen (8) gebrochen ist.

## Claims

1. Device for a belt conveyor plant, comprising:
a driving drum unit, which driving drum unit has a driving drum (1) and a drum shaft (3) connected to the driving drum (1), and
a gearless drive,
which drive has a rotor (2), a bearing-free rotor shaft (4) connected to the rotor (2) and a stator arranged around the rotor (2) on the outside, the rotor shaft (4) being connectable to the drum shaft (3), **characterized in that** the device has a support (6), which, in the event of separation between the rotor shaft (4) and drum shaft (3), supports the rotor shaft (4), without allowing touch contact between the rotor (2) and the stator, and which, in the event of connection between the rotor shaft (4) and drum shaft (3), does not touch the rotor shaft (4).

2. Device according to Claim 1, **characterized in that** the support is a radial support (6') which, in the event of separation between the rotor shaft (4) and drum shaft (3), supports the rotor shaft (4) radially during a rotational movement.

3. Device according to Claim 2, **characterized in that** the radial support (6') has a running surface made from bronze.

4. Device according to one of Claims 1 to 3, **characterized in that** the rotor shaft (4) is connectable to the drum shaft (3), a predetermined breaking point at the same time being formed.

5. Device according to one of Claims 1 to 4, **characterized in that** the support (6) is vertically adjustable.

6. Method for protecting a belt conveyor plant, which has a device according to one of Claims 1 to 5, against moment peaks, which method comprises the following steps:
a) connection of the drum shaft (3) and rotor shaft (4) via a shear bolt (8);
b) support of the rotor shaft (4) after the shear bolt (8) is broken.

7. Method according to Claim 6, which comprises the step:
b') radial support of the rotor shaft (4) in a rotational movement after the shear bolt (8) is broken.

## Revendications

1. Dispositif pour une installation de courroie transporteuse, comprenant :
une unité de tambour d'entraînement, laquelle unité de tambour d'entraînement présente un tambour d'entraînement (1) et un arbre de tambour (3) connecté au tambour d'entraînement (1), et
un entraînement sans engrenages, lequel entraînement présente un rotor (2), un arbre de rotor (4) sans palier, connecté au rotor (2), et un stator disposé à l'extérieur autour du rotor (2),
l'arbre de rotor (4) pouvant être connecté à l'arbre de tambour (3),
**caractérisé en ce que**
le dispositif présente un support (6) qui, dans le cas d'une séparation entre l'arbre de rotor (4) et l'arbre de tambour (3), supporte l'arbre de rotor (4) sans permettre de contact entre le rotor (2) et le stator, et qui, en cas de connexion entre l'arbre de rotor (4) et l'arbre de tambour (3), ne vient pas en contact avec l'arbre de rotor (4).

2. Dispositif selon la revendication 1, **caractérisé en ce que** le support est un support radial (6') qui, dans le cas d'une séparation entre l'arbre de rotor (4) et l'arbre de tambour (3), supporte radialement l'arbre de rotor (4) pendant un mouvement de rotation.

3. Dispositif selon la revendication 2, **caractérisé en ce que** le support radial (6') présente une surface de roulement en bronze.

4. Dispositif selon l'une quelconque des revendications 1 à 3, **caractérisé en ce que** l'arbre de rotor (4) peut être connecté à l'arbre de tambour (3) en formant une zone destinée à la rupture.

5. Dispositif selon l'une quelconque des revendications 1 à 4, **caractérisé en ce que** le support (6) est réglable en hauteur.

6. Procédé pour protéger une installation de courroie transporteuse, qui présente un dispositif selon l'une quelconque des revendications 1 à 5, contre des pointes de couple, lequel procédé comprend les étapes suivantes :
a) connexion de l'arbre de tambour (3) et de l'arbre de rotor (4) par le biais d'un boulon de cisaillement (8) ;
b) support de l'arbre de rotor (4) après la rupture du boulon de cisaillement (8).

7. Procédé selon la revendication 6, comprenant l'étape suivante :
b') support radial de l'arbre de rotor (4) dans un mouvement de rotation après la rupture du boulon de cisaillement (8).
